# EUROPÄISCHE PATENTSCHRIFT

(11) **EP 1 916 460 B1**
(45) Veröffentlichungstag und Bekanntmachung des Hinweises auf die Patenterteilung: **07.01.2009**
(21) Anmeldenummer: 07033520.3
(22) Anmeldetag: 17.10.2007
(51) Int. Cl.: F16K 17/04, F16K 31/06

(54) **Anordnung zur Druckbegrenzung mit Nenndruckumschaltung sowie elektromagnetisch betätigtes Druckbegrenzungsventil**
Assembly for pressure limitation with nominal pressure change and electromagnetically actuated pressure limitation valve
Agencement destiné à la limitation de la pression à l'aide d'une conversion de la pression nominale ainsi que clapet de limitation de pression activé de manière électromagnétique

(30) Priorität: 28.10.2006 DE 102006050929
(43) Veröffentlichungstag der Anmeldung: 30.04.2008
(73) Patentinhaber: THOMAS MAGNETE GmbH, 57562 Herdorf (DE)
(72) Erfinder: Leinweber, Marc, 57290 Neunkirchen (DE)

(56) Entgegenhaltungen:
- WO-A-92/04214
- DE-A1- 10 212 779
- DE-B3-5102004 014 48
- US-A- 3 236 256
- US-A- 3 473 780

## Beschreibung

Die Erfindung betrifft eine Anordnung zur Druckbegrenzung für einen hydraulisch/pneumatischen Verbraucher mit Nenndruckumschaltung mit mindestens einem elektromagnetisch betätigten Druckbegrenzungsventil gemäß dem Oberbegriff des Anspruches 1.

Druckbegrenzungsventile haben die Funktion, beim Erreichen eines Einstelldruckes bzw. Nenndruckes einen Öl- oder Fluidabfluss in einem Tank freizugeben, so dass bei geringem weiteren Druckanstieg ein Drosselquerschnitt schnell anwächst. Bei einem direkt gesteuerten Druckbegrenzungsventil hebt das Drucköl ein Dichtelement, z. B in Form eines Dichtkolbens oder -stößels, gegen eine Federkraft vom Sitz ab.

Druckbegrenzungsventile werden zumeist von einem das Ventil umgebenden Hubmagneten betätigt. Das Dichtelement steht direkt oder über einen Stößel in Wirkverbindung mit einem Hubankerkolben, dessen Hubrichtung entgegen der Federkraft gerichtet ist. Bei Erreichen des Nenndruckes erfolgt eine Bestromung der Spule, so dass der Ankerkolben gegen die Federkraft arbeitet und somit zwischen einen Zu- und Abfluss des Ventils eine Drosselwirkung erzeugt, die ein Durchschalten des Ventils bewirkt. Der Magnet arbeitet im Normalzustand im stromlos geschlossenen Zustand.

Bei einer Anordnung zur Druckbegrenzung ist es in vielen Anwendungsfällen erforderlich, den einzustellenden Nenndruck von einem vorher höheren Wert auf einen niedrigeren Wert zu senken. Die Realisierung einer solchen Nenndruckumschaltung erfordert zumindest ein weiteres Druckbegrenzungsventil sowie ein zusätzliches Wegeschaltventil.

Wenn das den höheren Nenndruck begrenzende erste Druckbegrenzungsventil direkt mit einer Druckleitung für einen Verbraucher verbunden ist, müssen in einem parallelen Zweig dazu das Wegeschaltventil und das zweites Druckbegrenzungsventil angeordnet werden, welches den niedrigeren Nenndruck begrenzen soll. Sperrt das Wegeschaltventil den Weg zum zweiten Druckbegrenzungsventil ab, regelt das erste Druckbegrenzungsventil die eingestellte, höhere Druckstufe. Wird das Wegschaltventil auf Durchgang geschaltet, spricht das zweite Druckbegrenzungsventil an, und es wird eine niedrigere Druckstufe realisiert.

DE 10 2004 014 485 B3 zeigt ein Druckbegrenzungsventil bei dem die Gegenkraft auf zwei Ventilfedern verteilt sind, die Ventilfedern sind also parallel geschaltet. Die Federanordnung dient ausschließlich der Reduzierung des Einbauraumes für das Druckbegrenzungsventil. Eine Umschaltung auf unterschiedliche Nenndrücke ist nicht vorgesehen.

DE 102 12 779 B4 zeigt ein elektromagnetisch betätigtes Druckbegrenzungsventil, das in zwei Stufen nacheinander durch einen Ventilkörper, der in ein Ventilgehäuse unter Betätigung durch einen Ankerkolben eines Hubmagneten eingesetzt ist, geöffnet und geschlossen wird. Der Ankerkolben ist dabei relativ zum Ventilkolben innerhalb eines vorbestimmten Bereiches verschiebbar. Durch das Zusammenwirken von Anschlagelementen wird ein Ventilkolben durch den Ankerkolben gezogen, wenn der Ankerkolben über einen vorbestimmten Bereich hinaus bewegt wird.

Aufgabe der Erfindung ist es, bei einer Anordnung zur Druckbegrenzung für einen Verbraucher mit Nenndruckumschaltung die Integration der kompletten Verschaltung von zwei Druckbegrenzungsventilen und einem Wegeschaltventil zu vereinfachen. Die Aufgabe wird mit dem Druckbegrenzungsventil gemäß Anspruch 1 gelöst.

Die vorliegende Erfindung ist dadurch gekennzeichnet, dass mit einem einzigen elektromagnetisch betätigtes Druckbegrenzungsventil mindestens zwei unterschiedliche Nenndruckstufen eingestellt werde können. Die Federanordnung, mit der bei Unterschreiten eines vom Verbraucher vorgegebenen Nenndruckes der Durchgang des Ventils verschlossen ist, umfasst dabei mindestens zwei Federn, die jeweils einem Ventilstößel zugeordnet sind, also parallel geschaltet sind und den einzustellenden Nenndruck kennzeichnen. Jede Feder mit dem zugehörigem Stößel arbeitet unabhängig von einander.

Bei zwei Federn und zwei Stößel wirken bei einer höheren Druckstufe die beiden Federn mit den ihnen zugeordneten Ventilstößeln gemeinsam auf ein Dichtelement. Durch Bestromen des Elektromagneten wird eine der beiden Federn und damit einer der Stößel vom Dichtelement weggeschaltet. Dies wird dadurch realisiert, dass dieser Stößel gegen die ihm zugeordnete Feder drückt, während der andere Stößel mit seiner ihm zugeordnetem Feder hiervon unbeeinflusst bleibt. Auf das Dichtelement wirkt jetzt nur noch der zweite Stößel mit der zweiten Feder, wodurch sich dadurch eine zweite niedrigere Druckstufe einstellt.

In einer vorteilhaften Weiterentwicklung der Erfindung bildet der Hubankerkolben den ersten Stößel, wobei die erste Feder an der dem Dichtkolben abgewandte Stirnseite des Hubankerkolbens drückt. Durch diese Anordnung wird der Bauraum des Ventils erheblich eingeschränkt. Kraftübertragungsverluste durch einen weiteren Stößel treten nicht mehr auf.

In einer weiteren vorteilhaften Ausgestaltung der Erfindung weist der Ankerkolben eine durchgehende Ankerbohrung auf, in der der zweite Stößel axial verschiebbar gelagert ist, und an dessen dem Dichtkolben abgewandten Stirnseite die zweite Feder angeordnet ist. Beide Stößel arbeiten dabei unabhängig voneinander und sind gegeneinander axial verschiebbar.

In einer zusätzlichen vorteilhaften Variante der Erfindung ist das Dichtelement Teil des zweiten Stößels. Der Dichtstößel weist hierzu ein zylinderförmiges Anschlussteil in Richtung des Hubankerkolbens auf, das sich über die gesamte axiale Länge des Hubankerkolbens erstreckt und im Bereich der ersten Feder endet.

Damit für die Einstellung des höheren Nenndruckes auch die Wirkung des Hubankerkolbens mit seiner zugeordneten Feder gewährleistet ist, weist der Dichtstößel des zweiten Stößels einen größeren Durchmesser auf, als der der Ankerbohrung. Damit wird an der zum Hubankerkolben hinweisenden Stirnseite des Dichtstößels eine radial nach außen sich erstreckende Schulter gebildet, gegen die die Stirnseite des Ankerkolbens drückt.

In einer weiteren vorteilhaften Ausführung der Erfindung ist die rückwärtige erste Feder in einem radial vergrößerten axialen Öffnungsraum der durchgehenden Ankerbohrung angeordnet. Sie stützt sich also nicht an der rückwärtigen Stirnseite des Ankerkolbens ab, sondern ist teilweise innerhalb des Kolbens gelagert. Der Hubkolbenraum wird somit vorteilhaft beim Hub nicht durch die Feder beeinträchtigt. Die Feder stützt sich mit ihrem einem Ende in dem radial axialen Öffnungsraum der Ankerbohrung und mit ihrem anderen Ende im Konusbereich ab.

In dieser Ausführung durchdringt der zweite Stößel die erste Feder auf ihrer gesamten axialen Länge, insbesondere im Bereich des radialen Öffnungsraumes, der dadurch koaxial ringförmig ausgestaltet ist und ein seitliches Abknicken der ersten Feder beim Zusammendrücken verhindert. Sie wird durch den zweiten Stößel geführt.

Beide Federn sind mit ihrem rückwärtigen Ende im Konusbereich des Magneten gelagert. In einer vorteilhaften weiteren Ausführung der Erfindung weist dazu der Konus einen axialen Durchlass aus. Der Konus bildet damit einen durchgehenden hülsenartigen Körper, dessen eine zum Ankerkolben gerichtete Stirnseite den Hubraum des Ankerkolbens begrenzt, und dessen anderes Ende das rückwärtige Ende des Magneten bildet. In dem Durchlass sind, im axialen Abstand zueinander angeordnet, Einstellbuchsen für jeweils eine Feder vorgesehen. Beide Einstellbuchsen sind axial verstellbar. Sie sind unabhängig von der jeweiligen Feder separat einstellbar.

In einer weiteren bevorzugten Ausführungsart der Erfindung stützt sich die zweite Feder mit ihrem einem Ende gegen eine axialen Stutzen des zweiten Stößels und mit ihrem ändern Ende gegen eine der Einstellbuchsen ab, wobei die Einstellbuchse der ersten Feder einen koaxialen Durchlass für die zweite Feder aufweist.

In einer besonders vorteilhaften Ausführung der Erfindung ist der Ankerkolben in einem Lagerrohr oder einer Lagerhülse geführt, wobei das Rohr oder die Hülse einenends innerhalb im Bereich des Dichtkolbens endet und anderenends innerhalb des Steuerkonusses und insbesondere bis zur dortigen Querwand des Konuses reicht und in der Ausführung als Lagerhülse dort den Hülsenboden aufweist. Der Magnetanker hat dadurch rundum einen gleichmäßigen Abstand zum Pol des Hubmagneten. Die bei einer exzentrischen Lage entstehenden Querkräfte, die zu zusätzlichen Hystereseverlusten führen, werden somit vermieden. Neben der Verbesserung im Hystereseverhalten hat diese Lagerart auch den Vorteil, dass das Rohr bzw. die Hülse zunächst mit dem zylindrischen Teil des Magnetpols druckdicht verschweißt wird. Anschließend wird dann der Konus mit dem Steuerkonus über das Rohr bzw. die Rohrhülse gestülpt und mit dem Pol verschweißt.

Bei der Lagerung des Hubankerns in einer Hülse ist es weiter vorteilhaft, wenn der Hülsenboden in Richtung des rückwärtigen Endes des Konusses einen axialen Stutzen aufweist, der sich in dem Durchlassbereich des Konuses erstreckt. Zur axialen Fixierung der Hülse sind im Bereich des Stutzens radial nach innen und umfangmäßig verteilte Sicken angeordnet. Der Stutzen bildet daher einen Topf. Der Topfboden weist einen radial sich erstreckenden Durchlass für die erste Feder auf.

Das erfindungsgemäße Druckbegrenzungsventil ist vorteilhaft einsetzbar bei Anordnungen zur Druckbegrenzung für einen hydraulisch/pneumatischen Verbraucher mit Nenndruckumschaltung. Mit dem erfinderischen Ventil wird der Aufbau von hydraulischen / pneumatischen Verbrauchern erheblich vereinfacht. Anstelle von mindestens drei Ventilen mit ihren Anschlussleitungen ist nur noch ein einziges Druckbegrenzungsventil erforderlich. Die begrenzten Drücke ergeben sich aus der Differenz der gesamten Federkraft zur Druckkraft, welche auf die druckwirkende Fläche am Zu- bzw. Abfluss des Ventils einwirkt.

Neben dem direkt gesteuerten Einsatz des Druckbegrenzungsventils, bei dem das Fluid das Dichteelement direkt gegen die Federanordnung vom Sitz abhebt, ist insbesondere auch der Einsatz in vorgesteuerten Ventilen vorteilhaft, bei denen das Schließelement durch den Mediumdruck beaufschlagt wird, der von einem Vorsteuerventil angesteuert wird. Insbesondere bei großen Stromstärken ist die vorgesteuerte Bauweise von Bedeutung. Dies bedingt kleinere Druckdifferenzen zwischen Öffnungsbeginn und -ende.

Weitere vorteilhafte Ausführungen der Erfindung ergeben sich aus den Unteransprüchen und einem in der Zeichnung nachfolgend beschriebenem Ausführungsbeispiel.

Fig. **1** zeigt einen Längsquerschnitt durch das erfindungsgemäße Druckbegrenzungsventil in einer ersten Position.

Fig. **2** zeigt einen Längsquerschnitt durch das erfindungsgemäße Druckbegrenzungsventil in einer zweiten Position.

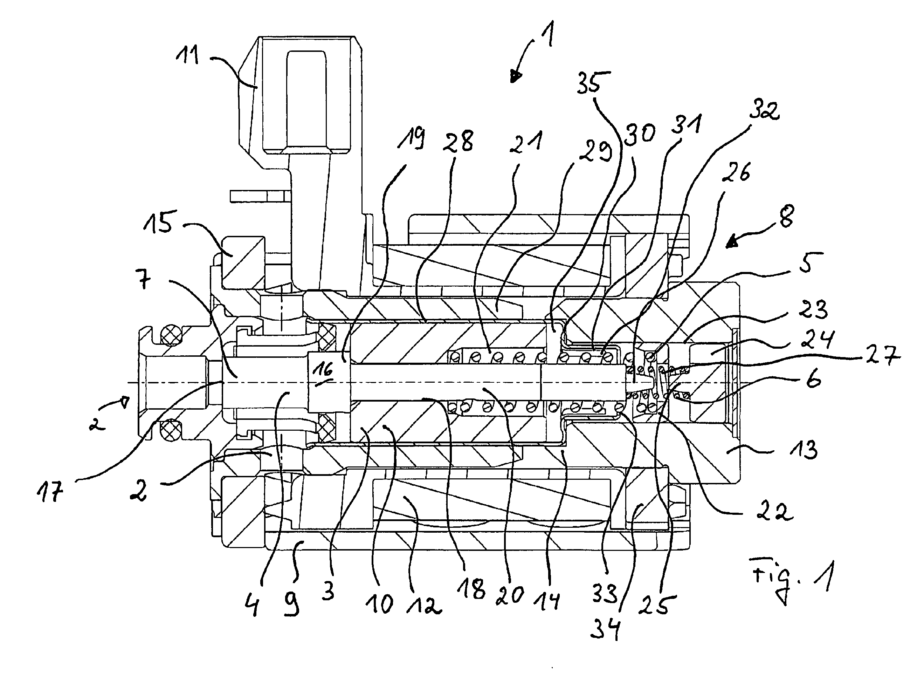

In Fig. **1** ist einen Längsquerschnitt eines elektromagnetisch betätigten Druckbegrenzungsventils **1** dargestellt, mit dem z. B. der Öldruck für einen Motor auf einen ersten, höheren Nenndruck begrenzt wird. Das Ventil **1** weist einen Zu- und /oder Abfluss **2** auf. Da es in beiden Richtungen betrieben werden kann, sind Zu- und Abfluss jeweils mit denselben Bezugszeichen versehen. In der folgenden Figurenbeschreibung wird davon ausgegangen, dass der Zufluss axial und der Abfluss radial erfolgen. Im Normalbetrieb, bei Unterschreiten des ersten Nenndruck, ist der Zu-/ und Abfluss **2** durch ein Dichtelement **7** über eine druckwirkende Fläche **17** unterbrochen.

Das Druckbegrenzungsventil **1** wird elektromagnetisch durch einen Hubmagneten **8** betätigt und weist zwei Stößel **(3, 4)** auf, denen jeweils eine axial wirkende Druckfeder **(5, 6)** zugeordnet ist, die unabhängig von einander arbeiten und parallel geschaltet sind. Die erste Feder **5** wirkt auf den ersten Stößel **4** und drückt diesen gegen die druckwirkende Fläche **17** des Dichtelementes **7.** Die Dichtfunktion wird verstärkt durch den zweiten Stößel **4** mit der ihm zugeordneten zweiten Feder **6,** die auf das Dichtelement **7** zusätzlich drückt. Die beiden Federkonstanten in Verbindung mit deren Durchmesserlegen damit den ersten höheren Nenndruck für das Ventil **1** fest.

Der Hubmagnet **8** ist zylinderförmig aufgebaut. Über einen elektrischen Stecker **11** wird eine um die beiden Stößel **(3, 4)** koaxial angeordnete zylinderförmige Spule **12** bestromt. Das magnetische Feld des Magneten **8** ist über ein flussführendes Gehäuse **9,** einem axial sich erstreckenden Konusteil **13** mit Steuerkonus **14** sowie einem radialen Teil **34,** einem Hubankerkolben **10** und über ein Joch **15** geschlossen. Der Hubankerkolben **10** bildet in dem Ausführungsbeispiel den ersten Stößel **3.** Er wird ausschließlich durch die ihm zugeordnete erste Druckfeder **5** nach links gegen die druckwirkende Fläche **17** am Zu- und/oder Abfluss **2** gedrückt.

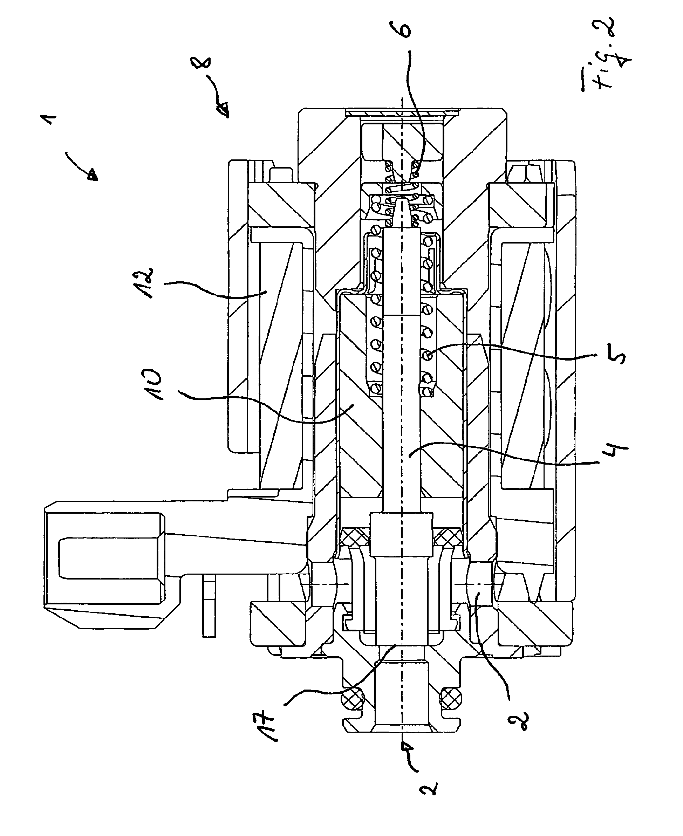

Die Hubrichtung des Ankerkolbens **10** ist gegen die Kraftwirkung der ersten Feder **5** gerichtet. In diesem Falle, wie dies in Fig. **2** dargestellt ist, wirkt ausschließlich der zweite Stößel **4** gegen die druckwirkende Fläche **17.** Das Ventil **1** arbeitet also stromlos geschlossenen. Zwischen der Querwand der axialen Konussteiles **13** und der gegenüber liegender Querwand des Hubankerkolbens **10** ist der Hubkolbenraum **35** ersichtlich, der bei einem Hub des Ankerkolbens **10** überwunden wird.

Der Hubankerkolben **10** oder der erste Stößel **3** weist eine durchgehende axiale Ankerbohrung **18** auf, in die der zweite Stößel **4** axial zum ersten Stößel 3 verschiebbar angeordnet und betätigbar ist. Der zweite Stößel **4** ist als Dichtstößel **19** ausgeführt, mit einem zylindrischen Anschlussteil **20,** das in der durchgehenden Ankerbohrung **18** angeordnet ist. Im Bereich des Dichtelementes **7** weist er einen radial vergrößerten Kopfteil **16** auf, dessen radialer Durchmesser größer ist als der der Ankebohrung **18.** Gegen die so gebildete Schulter drückt der Hubankerkolben **10** bzw. der erste Stößel **3.** Das zylindrische Anschlussteil **20** erstreckt sich axial von dem Kopfteil **16** durch die gesamte Ankerbohrung **18** und durchstößt die erste Feder **5** bis zu ihrer Lagerstelle im Konusbereich **13.**

Die durchgehende Ankerbohrung **18** weist an ihrem dem Konus **13** zugewandten Endbereich einen radial vergrößerten und axial sich erstreckenden Öffnungsraum **21** auf, der von dem zylindrischen Anschlussteil **20** des Dichtstößels **19** durchstoßen wird. Der Zwischenraum zwischen dem Außendurchmesser des Anschlussteiles **20** und dem Durchmesser des Öffnungsraumes bildet das eine Ende der ersten Druckfeder **3.**Durch das innen durchstoßende zylindrischen Anschlussteil **20** des zweiten Stößels **4** wird ein seitliches Abknicken der ersten Feder **5** in dem Zwischenraum verhindert.

Das andere Ende der ersten Feder **5** ist im axialen Konusteil **13** in einer ersten axial verschiebbaren Einstellbuchse **22** angeordnet. Das Teil **13** weist hierzu einen axialen Durchlass **23** auf, in dem auch die Lagerstelle für das Ende der zweiten Feder **4** angeordnet ist. Diese Lagerstelle wird durch eine zweite Einstellbuchse **24** gebildet, die zur Lagerung einen axial sich erstreckenden ersten Stutzen **25** aufweist. Die andere Lagerstelle an der Stirnseite des zylindrischen Anschlussteiles **20** bildet ein zweiter Stutzen **26.** Die Buchse **24** ist im Abstand noch hinter der ersten Buche **22** angeordnet und bildet die rückwärtige Abgrenzung des Konus **13.** Die erste Einstellbuchse **22** weist einen koaxialen Durchlass **27** für den Durchgriff der zweiten Feder **6** auf.

Zur Vermeidung von Schiefstellung des Hubankerkolbens **10** ist dieser in einer dünnwandigen Lagerhülse **28** angeordnet, die im Bereich des Kopfteils des Dichtelementes **7** fest verankert ist, sich axial über einen zylindrischen Teil des Pols **29** des Magneten **8** erstreckt und den Steuerkonus **14** innerhalb umschließt und an der entsprechenden Querwand des axialen Konussteiles **13** endet. Die Hülse **28** weist dabei auf ihrer gesamten axialen Länge überall den gleichen Durchmesser auf und ist axial fest mit einem zylindrischen Jochteil **29** des Gehäuses **9** verbunden. Innerhalb der Hülse **28** kann der Hubanker **10** Hubbewegungen nach links in Richtung des axialen Konusteiles **13** ausführen.

Der Hülsenboden **30** weist an der Stirnseite des Konuses im Bereich seines Durchlasses **23** einen weiteren Stutzen **31** auf, der sich axial in den Durchlass **23** des Konusses **13** erstreckt. Der Stutzen **31** weist hierzu radial nach Innen sich erstreckende und umfangmäßig verteilte Sicken **32** auf, die zur zusätzlichen Lagerung der Hülse **30** an dieser Stelle dienen. Der Stutzen **31** weist zum Durchdringen der dort angeordneten ersten Feder **5** einen weiteren Durchlass **33** auf. Die Sicken **32** verhindern gleichzeitig ein seitliches Abknicken der ersten Feder **5** in diesem Bereich.

Fig. **2** zeigt das Druckbegrenzungsventil **1** nach Umschaltung auf einen zweiten, niedrigern Nenndruck. Durch die Bestromung der Spule **12** wird der Hubanker **10** in Richtung des axialen Konusteiles **10** weg vom Dichtelement **3** wegbewegt. Er wirkt gegen die Gegenkraft seiner Feder **5.** In dieser Position wirkt ausschließlich der zweite Stößel **4** mit der zugehörigen zweiten Druckfeder **6** gegen die druckwirkende Fläche **17** des Zu- und / oder Abflusses **2** des Ventils **1** und bestimmt deren Nenndruck.

## Patentansprüche

1. Elektromagnetisch betätigtes Druckbegrenzungsventil (**1**)
- umfassend einen zylinderförmigen Hubmagneten (**8**) mit Spule (**12**), einem axialen Konusteil (**13**) mit Steuerkonus (**14**), Joch (15) und flussführendem Gehäuse (**9**),
- wobei in einer axialen Bohrung des Magneten (**8**) ein Hubankerkolben (**10**) angeordnet ist, der axial beweglich in Richtung des Konussteiles (**13**) Hubbewegungen ausführt, die auf einen axial angeordneten Stößel (**3, 4**) mit einem Dichtelement (**7**) wirken, das bei Überschreiten eines höheren ersten Nenndruckes des Ventils (**1**) einen Zu - und Abfluss des Ventils (**2**) öffnet,
- und der Zu - und Abfluss (**2**) im Normalfall durch eine axial angeordnete, und der Hubbewegung des Ankerkolbens (**10**) entgegenwirkende zylinderförmige Druckfederanordnung (**5, 6**) verschlossen ist,
- **dadurch gekennzeichnet, dass** die Druckfederanordnung (5, 6) und der Stößel (**3, 4**) mindestens zwei Druckfedern (**5, 6**) und zwei Stößel (**3, 4**) umfassen, wobei jedem Stößel (**3, 4**) eine Feder (**5, 6**) zugeordnet ist,
- und bei Bestromen des Magneten (**8**) eine der Feder (**5**) vom Dichtelement (**7**) weggeschaltet wird und nur noch die zweite Feder (**6**) auf das Dichtelement (**7**) wirkt, mit der ein zweiter, niedriger Nenndruck erzeugt wird.

2. Ventil nach Anspruch **1**, **dadurch gekennzeichnet, dass** der Hubankerkolben (**10**) als erster Stößel (**3**) ausgebildet ist, wobei die erste Feder (**5**) an der dem Dichtelement (**7**) abgewandten Stirnseite des Hubankerkolbens (**10**) drückt.

3. Ventil nach Anspruch **1** oder **2**, **dadurch gekennzeichnet, dass** der Hubankerkolben (**10**) eine durchgehende Ankerbohrung (**18**) aufweist, in der der zweite Stößel (**4**) axial verschiebbar zum ersten Stößel (**3**) gelagert ist, und an dessen dem Dichtelement (**7**) abgewandten Stirnseite die zweite Feder (**6**) angeordnet ist.

4. Ventil nach einem oder mehreren der Ansprüche **1** bis **3, dadurch gekennzeichnet, dass** der zweite Stößel (**4**) als Dichtstößel (**19**) des Dichtelementes (**7**) ein zylinderförmiges Anschlussteil (**20**) in Richtung des Hubankerkolbens (**10**) aufweist, wobei sich das Anschlussteil (**20**) über die gesamte axiale Länge des Hubankerkolbens (**10**) erstreckt und im Bereich der ersten Feder (**5**) endet.

5. Ventil nach Anspruche 4, **dadurch gekennzeichnet, dass** der Dichtstößel (**19**) im Bereich des Dichtelementes (**7**) ein Kopfteil (**16**) aufweist mit einem radialen Durchmesser, der größer ist als der Durchmesser der Ankerbohrung (**18**).

6. Ventil nach einem oder mehreren der Ansprüche **1** bis **5**, **dadurch gekennzeichnet, dass** die erste Feder (**5**) mit ihrem einem Ende in einen radial vergrößerten axialen Öffnungsraum (**21**) der Ankerbohrung (18) und mit ihrem anderen Ende im Konusteil (**13**) sich abstützt.

7. Ventil nach einem oder mehreren der Ansprüche 1 bis 6, **dadurch gekennzeichnet, dass** der zweite Stößel (**4**) im Bereich der ersten Feder (**5**) diese durchdringt.

8. Ventil nach einem oder mehreren der Ansprüche **1** bis **7**, **dadurch gekennzeichnet, dass** das axiale Konusteil (**13**) einen koaxialen Durchlass (**23**) aufweist, in die axiale, im Abstand zueinander angeordnete Einstellbuchsen (**22, 24**) für jeweils eine Feder (**5, 6**) vorgesehen sind.

9. Ventil nach einem oder mehreren der Ansprüche **1** bis **8**, **dadurch gekennzeichnet, dass** die zweite Feder (**6**) mit ihrem einem Ende gegen einen axialen Stutzen (**26**) des zweiten Stößels (**4**) und mit ihrem andern Ende gegen eine der Einstellbuchsen (**24**) sich abstützt.

10. Ventil nach Anspruch **9**, **dadurch gekennzeichnet, dass** die Einstellbuchse (**22**) der ersten Feder (**5**) einen koaxialen Durchlass (**27**) für die zweite Feder (**6**) aufweist.

11. Ventil nach einem oder mehreren der Ansprüche **1** bis **10**, **dadurch gekennzeichnet, dass** der Hubankerkolben (**10**) in einem Lagerrohr oder einer Lagerhülse (**28**) geführt wird, wobei das Rohr oder die Hülse (**28**) einenends innerhalb im Bereich des Dichtelementes (**7**) endet und anderenends innerhalb des Steuerkonusses (**14**) und insbesondere bis zur dortigen Querwand des axialen Konusbereiches (**13**) reicht und in der Ausführung als Lagerhülse (**28**) dort den Hülsenboden (**30**) bildet.

12. Ventil nach Anspruch 11, **dadurch gekennzeichnet, dass** in der Ausführung als Hülse (**28**) der Hülsenboden (**30**) in Richtung des rückwärtigen Endes des axialen Konusteiles (**13**) einen axialen Stutzen (**31**) aufweist, der sich in dem Durchlassbereich (**23**) des Teiles (**13**) erstreckt.

13. Ventil nach Anspruch **12**, **dadurch gekennzeichnet, dass** der axiale Stutzen (**31**) radial nach innen und umfangmäßig verteilte Sicken (**32**) aufweist.

14. Ventil nach Anspruch **11** bis **13, dadurch gekennzeichnet, dass** der Stutzen (**31**) zu einem Topf geformt ist mit einem für die erste Feder (5) am Topfboden radial sich erstreckenden weiteren Durchlass (**33**).

15. Anordnung zur Druckbegrenzung für einen hydraulisch / pneumatischen Verbraucher mit Nenndruckumschaltung umfassend mindestens ein elektromagnetisch betätigtes Druckbegrenzungsventil (**1**) gemäß einem oder mehreren der Ansprüche **1** bis **14.**

16. Anordnung nach Anspruch **15, dadurch gekennzeichnet, dass** das Druckbegrenzungsventil (**1**) direkt mit einem Arbeitsdruck der Anordnung beaufschlagt wird.

17. Anordnung nach Anspruch **15, dadurch gekennzeichnet, dass** das Druckbegrenzungsventil (**1**) Teil eines weiteren vorgesteuerten Druckbegrenzungsventil ist.

## Claims

1. Electromagnetically actuated pressure control valve (1)
- comprising a cylindrical linear solenoid (8) with coil (12), an axial cone part (13) with control cone (14), yoke (15) and flux-guiding housing (9),
- a reciprocating armature piston (10) being arranged in an axial bore in the solenoid (8), which reciprocating armature piston (10), axially movable in the direction of the cone part (13), performs reciprocating movements which act on an axially disposed plunger (3, 4) with a sealing element (7) which, if a higher, first nominal pressure of the valve (1) is exceeded, opens an in- and outlet of the valve (2),
- and the in- and outlet (2) being normally closed by an axially disposed cylindrical compression spring arrangement (5, 6) opposing the reciprocating movement of the armature piston (10),
- **characterized in that** the compression spring arrangement (5, 6) and the plunger (3, 4) comprise at least two compression springs (5, 6) and two plungers (3, 4), one spring (5, 6) being allocated to each plunger (3, 4),
- and one of the springs (5) is switched away from the sealing element (7) when the solenoid (8) is energized and only the second spring (6) continues to act on the sealing element (7), with which second spring (6) a second, lower nominal pressure is produced.

2. Valve according to Claim 1, **characterized in that** the reciprocating armature piston (10) is constructed as a first plunger (3), the first spring (5) pressing on the end face of the reciprocating armature piston (10) remote from the sealing element (7).

3. Valve according to Claim 1 or 2, **characterized in that** the reciprocating armature piston (10) comprises an armature through-bore (18), in which the second plunger (4) is mounted so as to be axially displaceable relative to the first plunger (3) and at whose end face remote from the sealing element (7) the second spring (6) is arranged.

4. Valve according to one or more of Claims 1 to 3, **characterized in that** the second plunger (4) comprises as sealing plunger (19) of the sealing element (7) a cylindrical connecting piece (20) in the direction of the reciprocating armature piston (10), the connecting piece (20) extending over the entire axial length of the reciprocating armature piston (10) and ending in the region of the first spring (5).

5. Valve according to Claim 4, **characterized in that,** in the region of the sealing element (7), the sealing plunger (19) comprises a head piece (16) with a radial diameter which is greater than the diameter of the armature bore (18).

6. Valve according to one or more of Claims 1 to 5, **characterized in that** the first spring (5) rests with its one end in a radially enlarged axial opening space (21) of the armature bore (18) and with its other end in the cone part (13).

7. Valve according to one or more of Claims 1 to 6, **characterized in that**, in the region of the first spring (5), the second plunger (4) penetrates through said first spring (5).

8. Valve according to one or more of Claims 1 to 7, **characterized in that** the axial cone part (13) comprises a coaxial passage (23), into which axial, mutually spaced adjusting bushes (22, 24) are provided in each case for one spring (5, 6).

9. Valve according to one or more of Claims 1 to 8, **characterized in that** the second spring (6) rests with its one end against an axial stub (26) of the second plunger (4) and with its other end against one of the adjusting bushes (24).

10. Valve according to Claim 9, **characterized in that** the adjusting bush (22) of the first spring (5) comprises a coaxial passage (27) for the second spring (6).

11. Valve according to one or more of Claims 1 to 10, **characterized in that** the reciprocating armature piston (10) is guided in a bearing tube or a bearing sleeve (28), the tube or the sleeve (28) at one end ending inside in the region of the sealing element (7) and at the other end extending within the control cone (14) and in particular as far as the transverse wall at that point of the axial cone region (13) and there forming the sleeve base (30) in the embodiment as a bearing sleeve (28).

12. Valve according to Claim 11, **characterized in that**, in the embodiment as a sleeve (28), the sleeve base (30) comprises in the direction of the rear end of the axial cone part (13) an axial stub (31), which extends in the passage region (23) of the part (13).

13. Valve according to Claim 12, **characterized in that** the axial stub (31) comprises radially inwardly, circumferentially distributed beads (32).

14. Valve according to Claims 11 to 13, **characterized in that** the stub (31) is shaped into a cup, with a further passage (33) extending radially at the cup base for the first spring (5).

15. Arrangement for controlling pressure for a hydraulic/pneumatic consumer with nominal pressure switching comprising at least one electromagnetically actuated pressure control valve (1) according to one or more of Claims 1 to 14.

16. Arrangement according to Claim 15, **characterized in that** the pressure control valve (1) is exposed directly to an operating pressure of the arrangement.

17. Arrangement according to Claim 15, **characterized in that** the pressure control valve (1) is part of a further servo-assisted pressure control valve.

## Revendications

1. Clapet de limitation de pression (1) activé de manière électromagnétique
- comprenant un aimant de levage (8) de forme cylindrique avec une bobine (12), une partie conique axiale (13) avec un cône de commande (14), une culasse (15) et un boîtier guidant le flux (9),
- un piston d'armature de levage (10) étant disposé dans un alésage axial de l'aimant (8) et effectuant des mouvements de levage de manière déplaçable axialement dans la direction de la partie conique (13), qui agissent sur un poussoir (3, 4) disposé axialement, avec un élément d'étanchéité (7) qui lors du dépassement d'une première pression nominale plus élevée du clapet (1) ouvre une entrée et une sortie du clapet (2),
et l'entrée et la sortie (2) étant fermées dans la situation normale par un agencement de ressort de pression (5, 6) de forme cylindrique disposé axialement et agissant à l'encontre du mouvement de levage du piston d'armature (10),
**caractérisé en ce que** l'agencement de ressort de pression (5, 6) et le poussoir (3, 4) comprennent au moins deux ressorts de pression (5, 6) et deux poussoirs (3, 4), un ressort (5, 6) étant associé à chaque poussoir (3, 4),
et lors de l'application de courant à l'aimant (8), l'un des ressorts (5) étant déconnecté de l'élément d'étanchéité (7) et seulement le deuxième ressort (6) agissant encore sur l'élément d'étanchéité (7), avec lequel une deuxième pression nominale plus faible est produite.

2. Clapet selon la revendication 1, **caractérisé en ce que** le piston d'armature de levage (10) est réalisé sous la forme du premier poussoir (3), le premier ressort (5) pressant contre le côté frontal du piston d'armature de levage (10) opposé à l'élément d'étanchéité (7).

3. Clapet selon la revendication 1 ou 2, **caractérisé en ce que** le piston d'armature de levage (10) présente un alésage d'armature traversant (18) dans lequel le deuxième poussoir (4) est monté de manière déplaçable axialement vers le premier poussoir (3) et sur le côté frontal duquel, opposé à l'élément d'étanchéité (7), est disposé le deuxième ressort (6).

4. Clapet selon l'une quelconque ou plusieurs des revendications 1 à 3, **caractérisé en ce que** le deuxième poussoir (4) présente, en tant que poussoir d'étanchéité (19) de l'élément d'étanchéité (7), une partie de raccord cylindrique (20) dans la direction du piston d'armature de levage (10), la partie de raccord (20) s'étendant sur toute la longueur axiale du piston d'armature de levage (10) et se terminant dans la région du premier ressort (5).

5. Clapet selon la revendication 4, **caractérisé en ce que** le poussoir d'étanchéité (19) présente, dans la région de l'élément d'étanchéité (7) une partie de tête (16) avec un diamètre radial, qui est supérieur au diamètre de l'alésage d'armature (18).

6. Clapet selon l'une quelconque ou plusieurs des revendications 1 à 5, **caractérisé en ce que** le premier ressort (5) s'appuie avec l'une de ses extrémités dans un espace d'ouverture (21) axial agrandi radialement de l'alésage d'armature (18) et avec son autre extrémité dans la partie conique (13).

7. Clapet selon l'une quelconque ou plusieurs des revendications 1 à 6, **caractérisé en ce que** le deuxième poussoir (4) traverse le premier ressort (5) dans la région de ce dernier.

8. Clapet selon l'une quelconque ou plusieurs des revendications 1 à 7, **caractérisé en ce que** la partie conique axiale (13) présente un passage coaxial (23) dans lequel sont prévues des douilles d'ajustement axiales (22, 24) disposées à distance l'une de l'autre, pour chaque ressort (5, 6) respectif.

9. Clapet selon l'une quelconque ou plusieurs des revendications 1 à 8, **caractérisé en ce que** le deuxième ressort (6) s'appuie avec l'une de ses extrémités contre une tubulure axiale (26) du deuxième poussoir (4) et avec son autre extrémité contre l'une des douilles d'ajustement (24).

10. Clapet selon la revendication 9, **caractérisé en ce que** la douille d'ajustement (22) du premier ressort (5) présente un passage coaxial (27) pour le deuxième ressort (6).

11. Clapet selon l'une quelconque ou plusieurs des revendications 1 à 10, **caractérisé en ce que** le piston d'armature de levage (10) est guidé dans un tube de palier ou un manchon de palier (28), le tube ou le manchon (28) se terminant à une extrémité à l'intérieur dans la région de l'élément d'étanchéité (7) et à l'autre extrémité s'étendant à l'intérieur du cône de commande (14) et en particulier jusqu'à la paroi transversale s'y trouvant de la région conique axiale (13) et y formant le fond du manchon (30) dans la forme de réalisation en tant que manchon de palier (28).

12. Clapet selon la revendication 11, **caractérisé en ce que** dans la forme de réalisation en tant que manchon (28), le fond de manchon (30) présente dans la direction de l'extrémité arrière de la partie conique axiale (13) une tubulure axiale (31) qui s'étend dans la région de passage (23) de la partie (13).

13. Clapet selon la revendication 12, **caractérisé en ce que** la tubulure axiale (31) présente des moulures (32) réparties radialement vers l'intérieur et sur la périphérie.

14. Clapet selon les revendications 11 à 13, **caractérisé en ce que** la tubulure (31) est formée en forme de pot avec un passage (33) supplémentaire s'étendant radialement sur le fond du pot pour le premier ressort (5).

15. Agencement de limitation de pression pour un consommateur hydraulique/pneumatique avec commutation de la pression nominale, comprenant au moins un clapet de limitation de pression (1) actionné de manière électromagnétique, selon l'une quelconque ou plusieurs des revendications 1 à 14.

16. Agencement selon la revendication 15, **caractérisé en ce que** le clapet de limitation de pression (1) est directement sollicité par une pression de travail de l'agencement.

17. Agencement selon la revendication 15, **caractérisé en ce que** le clapet de limitation de pression (1) fait partie d'un clapet de limitation de pression pré commandé supplémentaire.
